# EUROPÄISCHE PATENTSCHRIFT

(11) **EP 1 385 711 B1**
(45) Veröffentlichungstag und Bekanntmachung des Hinweises auf die Patenterteilung: **15.09.2004**
(21) Anmeldenummer: 03714885.5
(22) Anmeldetag: 27.03.2003
(51) Int. Cl.: B60J 7/14

(54) **HARDTOP-FAHRZEUGDACH MIT VERSTELLBARER HECKSCHEIBE**
HARDTOP VEHICLE ROOF COMPRISING A DISPLACEABLE REAR WINDOW
TOIT RIGIDE AMOVIBLE DE VEHICULE A LUNETTE ARRIERE DEPLACABLE

(30) Priorität: 26.04.2002 DE 10218874
(43) Veröffentlichungstag der Anmeldung: 04.02.2004
(73) Patentinhaber: CTS Fahrzeug-Dachsysteme GmbH, 21079 Hamburg (DE)
(72) Erfinder: WAGNER, Tobias, 21149 Hamburg (DE)
(74) Vertreter: Müller, Gottfried
(86) Internationale Anmeldenummer: PCT/EP2003/003160
(87) Internationale Veröffentlichungsnummer: WO 2003/091053

(56) Entgegenhaltungen:
- EP-A- 1 092 580
- DE-A- 19 936 252
- DE-C- 19 807 490
- FR-A- 2 805 218
- FR-A- 2 805 219

## Beschreibung

Die Erfindung bezieht sich auf ein Hardtop-Fahrzeugdach nach dem Oberbegriff des Anspruches 1.

Aus der Druckschrift DE 198 07 490 C1 ist ein zweiteiliges Hardtop-Fahrzeugdach mit einem vorderen und einem hinteren Dachteil bekannt, die über eine Verstellkinematik zwischen einer den Fahrzeuginnenraum überdeckenden Schließposition und einer heckseitigen Ablage- bzw. Öffnungsposition zu verstellen sind, in welcher beide Dachteile in einem heckseitigen Ablageraum verstaut sind. Das hintere Dachteil enthält eine Heckscheibe, die relativ zum hinteren Dachteil verstellt werden kann. In Schließposition des Fahrzeugdaches liegt die Heckscheibe in einer gemeinsamen Dachebene mit dem hinteren Dachteil und nimmt eine Dichtposition ein, in Ablageposition dagegen wird die Heckscheibe um eine am hinteren Dachteil gehaltene Gelenkachse in der Weise gegenüber dem Dachteil verschwenkt, dass die Heckscheibe eine gegenüber dem hinteren Dachteil im Ablageraum angehobene Position einnimmt, wodurch der frei zur Verfügung stehende Kofferraum vergrößert wird. Die Gelenkachse zwischen Heckscheibe und hinterem Dachteil befindet sich im Bereich des dem Fahrzeugheck zugewandten Abschnittes des hinteren Dachteiles. Über einen Steuerhebel, der einenends gelenkig mit der Fahrzeugkarosserie und anderenends gelenkig mit der Heckscheibe gekoppelt ist, wird bei der Ablagebewegung des hinteren Dachteiles eine Zwangs-Aufschwenkbewegung der Heckscheibe gegenüber dem hinteren Dachteil in Abhängigkeit der Dachteilbewegung erreicht.

Es handelt sich bei der Relativbewegung zwischen Heckscheibe und hinterem Dachteil um eine ausschließlich rotatorische Kippbewegung, was dazu führt, dass in Ablageposition die Scheibenebene der Heckscheibe mit der Ebene des hinteren Dachteiles einen Relativwinkel einschließt. Der zusätzliche Kofferraum, der durch die Kippbewegung der Heckscheibe gewonnen wird, besitzt die Form eines spitzwinkligen Sektors, so dass insbesondere im Kofferraumbereich benachbart zur zwischen Kofferraum und Fahrzeuginnenraum gelegenen Kofferraumrückwand kein oder nur ein geringer zusätzlicher Stauraum gewonnen wird.

Aus den Druckschriften FR 2 805 218 A1 bzw. FR 2 805 219 A1 ist ein zweiteiliges Hardtop bekannt, dessen hinteres Dachteil seitliche C-Säulen aufweist, zwischen denen sich in Schließposition des Fahrzeugdaches eine Heckscheibe erstreckt. Die Heckscheibe ist einenends über einen Gelenkhebel, der fest mit der Heckscheibe verbunden ist, schwenkbar an der Fahrzeugkarosserie gelagert und anderenends über einen weiteren Gelenkhebel, der zwei Drehgelenke umfasst, schwenkbar an den C-Säulen gehalten. Bei der Ablagebewegung des Fahrzeugdaches führt die Heckscheibe eine Kreisbewegung um ihr karosserieseitiges Drehgelenk aus. Die C-Säulen des hinteren Dachteiles sind ebenfalls drehbar an der Fahrzeugkarosserie gehalten, wobei die Drehgelenke zwischen C-Säulen und Heckscheibe voneinander beabstandet sind. Die unterschiedlichen Drehbewegungen bei der Ablage des Daches zwischen Heckscheibe und C-Säulen führen bei der Ablagebewegung zu einer Relativbewegung der Heckscheibe gegenüber den C-Säulen, wobei der obere Gelenkhebel eine Zwangsführung des oberen Abschnittes der Heckscheibe relativ zu den C-Säulen bewirkt.

Bei diesem Fahrzeugdach ist die Heckscheibe unmittelbar an der Fahrzeugkarosserie drehbar gelagert. Hierdurch werden die Ablagemöglichkeiten für die Heckscheibe erheblich eingeschränkt. Es ist insbesondere nicht möglich, die Ablagebewegung der Hardtop-Dachteile unabhängig von der Heckscheiben-Ablagebewegung durchzuführen, da das hintere Dachteil über die Heckscheibe eine zweite Bindung an die Fahrzeugkarosserie besitzt.

Zum technologischen Hintergrund werden ergänzend die Druckschriften EP 1 092 580 A1 sowie DE 199 36 252 A1 genannt.

Der Erfindung liegt das Problem zugrunde, ein Hardtop-Fahrzeugdach in Ablageposition in platzsparender Weise zu verstauen, so dass bei abgelegtem Fahrzeugdach ein zusätzlicher, frei nutzbarer Kofferraum zur Verfügung steht.

Dieses Problem wird erfindungsgemäß mit den Merkmalen des Anspruches 1 gelöst. Die Unteransprüche geben zweckmäßige Weiterbildungen an.

Die Heckscheibe ist über eine Viergelenkkinematik, welche zwei Lenker umfasst, mit dem hinteren Dachteil verbunden, wodurch die Heckscheibe gegenüber dem hinteren Dachteil eine Schwenkbewegung ausführen kann, die sowohl eine translatorische als auch eine rotatorische Komponente umfasst. Hierdurch werden zusätzliche Ablagemöglichkeiten für das Fahrzeugdach bei verkleinertem Stauvolumen geschaffen, da die Heckscheibe nunmehr gegenüber dem hinteren Dachteil vollständig, gegebenenfalls auch nur teilweise, angehoben werden kann, so dass sämtliche Abschnitte der Heckscheibe relativ zum hinteren Dachteil eine andere Position einnehmen als in Schließposition des Fahrzeugdaches, wohingegen im Stand der Technik Heckscheibe und hinteres Dachteil im Bereich der gemeinsamen Gelenkachse fest miteinander verbunden sind. Bei der erfindungsgemäßen Ausführung bestehen grundsätzlich mehr Stell- und Bewegungsmöglichkeiten der Heckscheibe gegenüber dem hinteren Dachteil als dies im Stand der Technik der Fall ist.

Die Viergelenkkinematik umfasst zwei Lenker, die jeweils einenends gelenkig mit dem hinteren Dachteil und anderenends gelenkig mit der Heckscheibe gekoppelt sind. Hierdurch wird eine Viergelenkkinematik realisiert, über die die kombinierte translatorische und rotatorische Stellbewegung erreicht werden kann. Grundsätzlich reicht eine Viergelenkkinematik pro Seite zwischen Heckscheibe und hinterem Dachteil aus; gegebenenfalls kann auch eine weitere Viergelenkkinematik oder eine sonstige Kinematik vorgesehen sein, wobei die beiden Kinematiken in Fahrzeuglängsrichtung hintereinander liegend angeordnet sind.

Über die Geometrien der beiden Lenker der Viergelenkkinematik kann die Relativbewegung zwischen Heckscheibe und hinterem Dachteil beeinflusst werden. So ist es beispielsweise möglich, die beiden Lenker unterschiedlich lang auszubilden, so dass die Heckscheibe in ausgelenkter Position mit dem hinteren Dachteil einen Winkel einschließt. Hierbei kann es sich als zweckmäßig erweisen, den vorderen Lenker länger auszuführen als den hinteren Lenker, so dass der vordere Teil der Heckscheibe stärker angehoben ist als der hintere Teil der Heckscheibe. Bei einer Verschwenkung des hinteren Dachteiles bei der Überführung von Schließposition in Ablageposition um eine karosseriefeste Drehachse in den Ablageraum hinein ist die Dachaußenseite des hinteren Dachteiles nach unten abgelegt; zugleich ist der vordere Teil der Heckscheibe in Ablageposition dem Fahrzeugheck zugewandt und gegenüber der Dachebene des hinteren Dachteiles in eine angehobene Position verstellt.

Es kann aber auch vorteilhaft sein, beide Lenker gleich lang auszuführen, so dass in ausgelenkter Position Heckscheibe und hinteres Dachteil parallel zueinander liegen.

Die Auslenkbewegung der Heckscheibe relativ zum hinteren Dachteil ist bevorzugt als zwangsgeführte Bewegung ausgeführt, die über einen Steuerhebel erzwungen wird, welcher einenends mit dem vorderen Dachteil gelenkig gekoppelt ist und anderenends mit der Heckscheibe, insbesondere mit einem der beiden an der Heckscheibe angreifenden Lenker schwenkbar verbunden ist. Die Relativbewegung des vorderen Dachteiles gegenüber dem hinteren Dachteil bei der Überführung von Schließ- in Ablageposition wird als Steuerbewegung über den Steuerhebel auf die Heckscheibe übertragen, so dass kein zusätzlicher Stellantrieb für die Auslenkbewegung der Heckscheibe gegenüber dem hinteren Dachteil erforderlich ist.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht auf ein zweiteiliges Hardtop-Fahrzeugdach in Schließposition, in welcher das vordere Dachteil und das hintere Dachteil unmittelbar hintereinander in einer gemeinsamen Dachebene liegen und die Heckscheibe sich in ihrer Dichtposition im hinteren Dachteil befindet,
- Fig. 2: das Hardtop-Fahrzeugdach in einer ersten Zwischenposition bei der Überführung von Schließ- in Ablageposition, wobei die Heckscheibe relativ zum hinteren Dachteil ausgelenkt ist,
- Fig. 3: das Hardtop-Fahrzeugdach in einer weiter fortgeschrittenen Zwischenposition,
- Fig. 4: das Hardtop-Fahrzeugdach in Ablageposition.

In den Figuren sind gleiche Bauteile mit gleichen Bezugszeichen versehen.

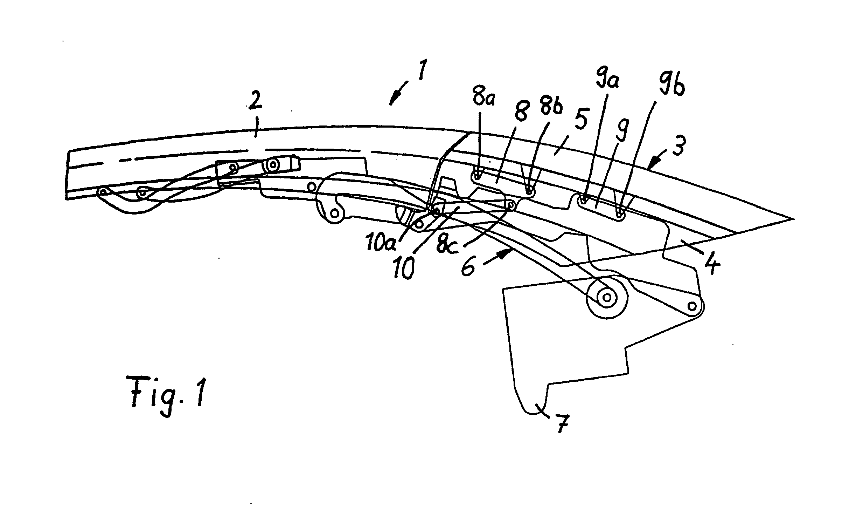

Das in Fig. 1 dargestellte Hardtop-Fahrzeugdach 1 weist ein vorderes Dachteil 2 und ein hinteres Dachteil 3 auf, die in der dargestellten Schließposition in Fahrzeuglängsrichtung gesehen unmittelbar hintereinander liegend angeordnet sind und einen Fahrzeuginnenraum überdecken. Beide Dachteile 2 und 3 sind in sich starr ausgebildet. Das hintere Dachteil 3 umfasst seitliche C-Säulen 4 sowie eine Heckscheibe 5, die in Schließposition zwischen den C-Säulen 4 eingefasst ist. Das Fahrzeugdach 1 ist über eine Verstellkinematik 6 zwischen Schließ- und einer heckseitigen Ablageposition zu verstellen, wobei die Verstellkinematik 6 an einer Konsole bzw. einem Hauptlager 7 gelenkig angebunden ist.

Die Heckscheibe 5 ist verstellbar mit dem hinteren Dachteil 3 verbunden und kann aus der in Fig. 1 dargestellten geschlossenen Dichtposition in eine gegenüber dem hinteren Dachteil 3, insbesondere gegenüber den C-Säulen 4 ausgelenkte Position verstellt werden. Die Heckscheibe 5 ist über zwei Lenker 8 und 9 mit dem hinteren Dachteil 3 gekoppelt, wobei die beiden Lenker 8 und 9 in Fahrzeuglängsrichtung gesehen hintereinander liegend angeordnet sind und eine Viergelenkkinematik bilden, welche eine kombinierte translatorisch-rotatorische Stellbewegung der Heckscheibe 5 gegenüber dem hinteren Dachteil 3 bzw. den C-Säulen 4 ermöglicht. Die beiden Lenker 8 und 9 sind jeweils über in Fahrzeuglängsrichtung vorne liegende Gelenke 8a bzw. 9a schwenkbar mit dem hinteren Dachteil 3 und mit in Fahrzeuglängsrichtung hinteren Gelenken 8b bzw. 9b schwenkbar mit der Heckscheibe 5 gekoppelt. Die beiden Lenker 8 und 9 besitzen unterschiedliche Längen, wobei der vordere Lenker 8 länger ausgeführt ist als der hintere Lenker 9. Die beiden Lenker 8 und 9 liegen auf Abstand zueinander, wobei der zwischenliegende Abstand etwa der Länge des hinteren Lenkers 9 entspricht.

Zur Steuerung der Ausstellbewegung der Heckscheibe 5 gegenüber dem hinteren Dachteil 3 ist ein Steuerhebel 10 vorgesehen, welcher einenends über ein Gelenk 8c schwenkbar mit dem vorderen Lenker 8 und anderenends über ein Gelenk 10a schwenkbar mit dem vorderen Dachteil 2 bzw. einem Bauteil, das fest mit dem Dachteil 2 gekoppelt ist, verbunden ist. Bei einer Betätigung der Verstellkinematik 6 zur Überführung des Fahrzeugdaches 1 zwischen Schließposition und Ablageposition ändert sich die Relativlage zwischen vorderem Dachteil 2 und hinterem Dachteil 3, wobei diese Änderung der Relativlage über den Steuerhebel 10 als Steuerbewegung auf den vorderen Lenker 8 übertragen wird. Diese Steuerbewegung löst eine zwangsgeführte Bewegung der Heckscheibe 5 relativ zum hinteren Dachteil 3 aus. Das Gelenk 8c, über das der Steuerhebel 10 schwenkbar mit dem vorderen Lenker 8 verbunden ist, befindet sich zwischen den äußeren Gelenken 8a und 8b am vorderen Lenker, jedoch in Bezug auf eine Verbindungslinie zwischen den Gelenken 8a und 8b nach außen versetzt.

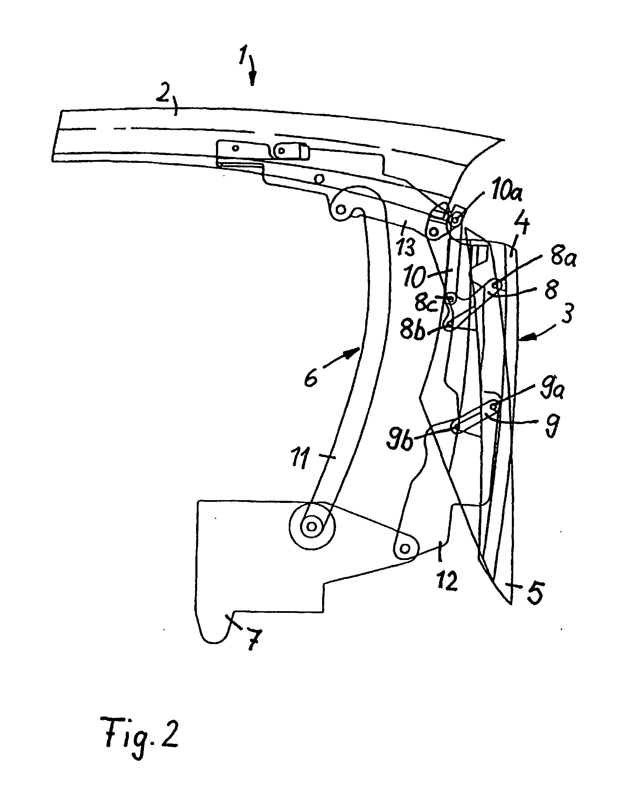

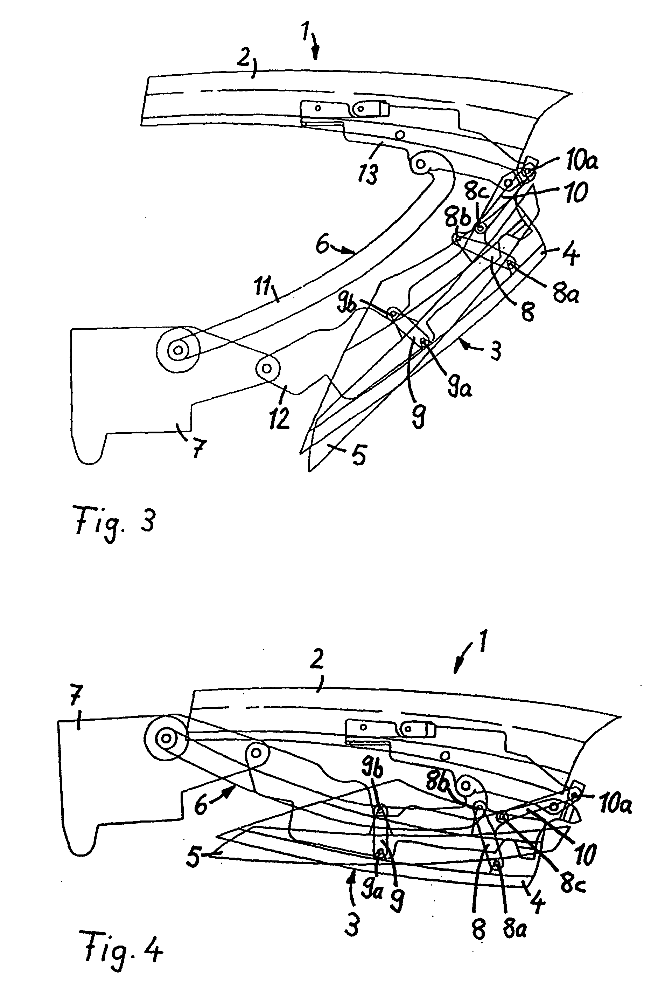

Wie den Zwischenpositionen gemäß Fig. 2 und Fig. 3 zu entnehmen, wird bei der Überführung des Fahrzeugdaches 1 von Schließposition in Ablageposition die von einem Aktuator betätigte und als Viergelenkkinematik ausgeführte Stellkinematik 6 um zwei karosseriefeste Schwenkachsen verschwenkt. Die Verstellkinematik 6 umfasst zwei Hauptlenker 11 und 12, die jeweils einenends gelenkig am Hauptlager 7 und anderenends gelenkig am vorderen Dachteil 2 angebunden sind. Der hintere Hauptlenker 12 ist Träger des hinteren Dachteiles 3. Bei einer Verschwenkung des hinteren Hauptlenkers 12 um seine karosseriefeste Schwenkachse wird das hintere Dachteil 3 nach hinten in den Ablageraum hineingeklappt, so dass die Dachaußenseite des hinteren Dachteiles 3 in der in Fig. 4 dargestellten Ablageposition nach unten weist. Das vordere Dachteil 2 kommt in Ablageposition auf dem hinteren Dachteil 3 zum Liegen, wobei die Dachaußenseite des vorderen Dachteiles 2 nach oben weist.

Der Steuerhebel 10, welcher am vorderen Lenker 8 der Viergelenkkinematik der Heckscheibe 5 angreift, ist auf der dem vorderen Lenker 8 abgewandten Seite über das Gelenk 10a mit einem Verbindungslenker 13 schwenkbar gekoppelt, welcher fest mit dem vorderen Dachteil 2 verbunden ist und an dem die beiden Hauptlenker 11 und 12 gelenkig angreifen. Das Gelenk 10a des Steuerhebels 10 liegt benachbart, jedoch beabstandet zum Drehgelenk des hinteren Hauptlenkers 12 am Verbindungslenker 13.

Bei einer Stellbewegung der Verstellkinematik 6 zur Überführung des Fahrzeugdaches von Schließ- in Ablageposition ändert sich die Relativlage zwischen vorderem Dachteil 2 und hinterem Dachteil 3, indem die beiden Dachteile 2, 3 aus der in Fig. 1 dargestellten, in einer gemeinsamen Dachebene liegenden Position in eine zueinander winklige Position überführt werden. Diese Änderung der Relativlage zwischen den beiden Dachteilen wird über den am vorderen Dachteil 2 gelenkig angebundenen Steuerhebel 10 auf den vorderen Lenker 8 der Gelenkkinematik der Heckscheibe 5 übertragen, woraufhin der vordere Lenker 8 eine Schwenkbewegung ausführt und sowohl um sein Gelenk 8a am hinteren Dachteil 3 als auch um sein Gelenk 8b an der Heckscheibe 5 verdreht wird, was zur Folge hat, dass die Relativlage der Heckscheibe 5 gegenüber dem hinteren Dachteil 3 verändert wird und die Heckscheibe 5 aus ihrer geschlossenen Dichtlage in eine ausgelenkte Lage verstellt wird. Der hintere Lenker 9 der Kinematik der Heckscheibe führt aufgrund einer kinematischen Kopplung über die Heckscheibe bzw. einen fest mit der Heckscheibe verbundenen Lenker eine entsprechende Bewegung mit einer Drehung um seine beiden Gelenke 9a und 9b aus. Die Kombination der Bewegungen von vorderem Lenker 8 und hinterem Lenker 9 führt zu einer Schwenkbewegung der Heckscheibe 5 gegenüber dem hinteren Dachteil 3 mit einer rotatorischen und einer translatorischen Komponente. In Abhängigkeit von den gewählten Geometrien, insbesondere der Länge der beiden Lenker 8 und 9, kann in der Ablageposition des Fahrzeugdaches gemäß Fig. 4 eine parallele und nach oben versetzte Lage der Heckscheibe 5 relativ zum hinteren Dachteil 3 oder aber eine winklige und nach oben versetzte Relativlage eingestellt werden. Aufgrund der Trennung der Heckscheibe vom hinteren Dachteil bzw. den C-Säulen kann eine umlaufende Dichtung im hinteren Dachteil eingebracht werden, die die Heckscheibe in ihrer geschlossenen Position abdichtet.

## Patentansprüche

1. Hardtop-Fahrzeugdach, mit mindestens zwei Dachteilen (2, 3), die über eine Verstellkinematik (6) zwischen einer den Fahrzeuginnenraum überdeckenden Schließstellung und einer Öffnungsstellung verstellbar sind, in der die Dachteile (2, 3) in einem heckseitigen Ablageraum abgelegt sind, und mit einer im hinteren Dachteil (3) angeordneten und relativ zum hinteren Dachteil (3) verstellbaren Heckscheibe (5),
welche über eine Viergelenkkinematik mit zwei Lenkern (8, 9) mit dem hinteren Dachteil (3) verbunden ist, wobei die beiden Lenker (8, 9) jeweils einenends gelenkig mit dem hinteren Dachteil (3) und anderenends gelenkig mit der Heckscheibe (5) gekoppelt sind, **dadurch gekennzeichnet, dass** die Heckscheibe (5) über einen mit dem vorderen Dachteil (2) gelenkig gekoppelten Steuerhebel (10) relativ zum hinteren Dachteil (3) zwangsgeführt ist.

2. Hardtop-Fahrzeugdach nach Anspruch 1,
**dadurch gekennzeichnet,**
**dass** der Steuerhebel (10) auf seiner der Heckscheibe (5) zugewandten Seite gelenkig mit einem der beiden Lenker (8, 9) gekoppelt ist.

3. Hardtop-Fahrzeugdach nach Anspruch 1 oder 2,
**dadurch gekennzeichnet,**
**dass** das hintere Dachteil (3) um eine karosseriefeste Drehachse verschwenkbar ist und in Öffnungsstellung mit seiner Dachaußenseite nach unten im Ablageraum verstaut ist und dass die Heckscheibe (5) in Öffnungsstellung sich in einer relativ zum hinteren Dachteil (3) nach oben angehobenen Position befindet.

4. Hardtop-Fahrzeugdach nach einem der Ansprüche 1 bis 3,
**dadurch gekennzeichnet,**
**dass** die beiden Lenker (8, 9) in Fahrzeuglängsrichtung gesehen hintereinander liegend angeordnet sind.

5. Hardtop-Fahrzeugdach nach einem der Ansprüche 1 bis 4,
**dadurch gekennzeichnet,**
**dass** die beiden Lenker (8, 9) eine unterschiedliche Länge aufweisen.

6. Hardtop-Fahrzeugdach nach Anspruch 5,
**dadurch gekennzeichnet,**
**dass** der vordere Lenker (8) länger ist als der hintere Lenker (9).

7. Hardtop-Fahrzeugdach nach einem der Ansprüche 1 bis 6,
**dadurch gekennzeichnet,**
**dass** das vordere Dachteil (2) und das hintere Dachteil (3) über eine als Viergelenk ausgeführte Verstellkinematik (6) mit der Fahrzeugkarosserie verbunden sind.

## Claims

1. Hardtop vehicle roof, having at least two roof parts (2, 3) which can be adjusted via an adjusting kinematics (6) between a closed position covering the vehicle interior and an open position in which the roof parts (2, 3) are stored in a storage space at the rear, and having a rear window (5) which is arranged in the rear roof part (3), can be adjusted relative to the rear roof part (3) and is connected to the rear roof part (3) via a four-bar kinematics having two links (8, 9), the two links (8, 9) being coupled in each case at one end in an articulated manner to the rear roof part (3) and at the other end in an articulated manner to the rear window (5), **characterized in that** the rear window (5) is positively guided relative to the rear roof part (3) via a control lever (10) coupled in an articulated manner to the front roof part (2).

2. Hardtop vehicle roof according to Claim 1,
**characterized in that** the control lever (10) is coupled, on its side facing the rear window (5), in an articulated manner to one of the two links (8, 9).

3. Hardtop vehicle roof according to Claim 1 or 2, **characterized in that** the rear roof part (3) can be pivoted about an axis of rotation fixed on the body and, in the open position, can be stored in the storage space with its roof outer side downwards, and **in that**, in the open position, the rear window (5) is situated in a position in which it is raised upwards relative to the rear roof part (3).

4. Hardtop vehicle roof according to one of Claims 1 to 3, **characterized in that** the two links (8, 9) are arranged lying one behind the other, as seen in the longitudinal direction of the vehicle.

5. Hardtop vehicle roof according to one of Claims 1 to 4, **characterized in that** the two links (8, 9) differ in length.

6. Hardtop vehicle roof according to Claim 5, **characterized in that** the front link (8) is longer than the rear link (9).

7. Hardtop vehicle roof according to one of Claims 1 to 6, **characterized in that** the front roof part (2) and the rear roof part (3) are connected to the vehicle body via an adjusting kinematics (6) designed as a four-bar linkage.

## Revendications

1. Toit rigide et amovible de véhicule comprenant au moins deux parties de toit (2, 3), qui peuvent être déplacées par le biais d'une cinématique de réglage (6) entre une position de fermeture recouvrant l'habitacle du véhicule et une position d'ouverture dans laquelle les parties de toit (2, 3) sont rangées dans un espace de rangement du côté arrière, et comprenant une lunette arrière (5) disposée dans la partie de toit arrière (3) et réglable par rapport à la partie de toit arrière (3), laquelle est connectée par le biais d'une cinématique à quatre joints articulés avec deux bras oscillants (8, 9) à la partie de toit arrière (3), les deux bras oscillants (8, 9) étant accouplés à chaque fois à une extrémité de manière articulée à la partie de toit arrière (3) et à l'autre extrémité de manière articulée à la lunette arrière (5), **caractérisé en ce que** la lunette arrière (5) est guidée de manière forcée par rapport à la partie de toit arrière (3) par le biais d'un levier de commande (10) accouplé de manière articulée à la partie de toit avant (2).

2. Toit rigide et amovible de véhicule selon la revendication 1,
**caractérisé en ce que**
le levier de commande (10) est accouplé sur son côté tourné vers la lunette arrière (5) de manière articulée à l'un des deux bras oscillants (8, 9).

3. Toit rigide et amovible de véhicule selon la revendication 1 ou 2,
**caractérisé en ce que**
la partie de toit arrière (3) peut pivoter autour d'un axe de rotation fixé à la carrosserie et est rangée dans la position d'ouverture avec son côté extérieur de toit vers le bas dans l'espace de
rangement et **en ce que** la lunette arrière (5) se trouve dans la position d'ouverture dans une position soulevée vers le haut par rapport à la partie de toit arrière (3).

4. Toit rigide et amovible de véhicule selon l'une quelconque des revendications 1 à 3,
**caractérisé en ce que**
les deux bras oscillants (8, 9) sont disposés l'un derrière l'autre, vu dans la direction longitudinale du véhicule.

5. Toit rigide et amovible de véhicule selon l'une quelconque des revendications 1 à 4,
**caractérisé en ce que**
les deux bras oscillants (8, 9) présentent une longueur différente.

6. Toit rigide et amovible de véhicule selon la revendication 5,
**caractérisé en ce que**
le bras oscillant avant (8) est plus long que le bras oscillant arrière (9).

7. Toit rigide et amovible de véhicule selon l'une quelconque des revendications 1 à 6,
**caractérisé en ce que**
la partie de toit avant (2) et la partie de toit arrière (3) sont connectées à la carrosserie du véhicule par le biais d'une cinématique de réglage (6) réalisée sous forme de quatre joints articulés.
